Europäisches Patentamt

(19) European Patent Office

Office européen des brevets

(11) Numéro de publication : **0 211 854**
**B1**

(12) **FASCICULE DE BREVET EUROPÉEN**

(45) Date de publication du fascicule du brevet :
17.05.89

(51) Int. Cl.⁴ : **G 21 C   3/10**

(21) Numéro de dépôt : **86900789.8**

(22) Date de dépôt : **23.01.86**

(86) Numéro de dépôt international :
**PCT/FR 86/00021**

(87) Numéro de publication internationale :
**WO/8604728 (14.08.86 Gazette 86/18)**

(54) **ELEMENT DE COMBUSTIBLE POUR UN REACTEUR NUCLEAIRE.**

(30) Priorité : **12.02.85 FR 8501950**

(43) Date de publication de la demande :
**04.03.87 Bulletin 87/10**

(45) Mention de la délivrance du brevet :
**17.05.89 Bulletin 89/20**

(84) Etats contractants désignés :
**BE DE GB IT**

(56) Documents cités :
**DE—A—   813 301**
**FR—A— 1 550 653**
**FR—A— 2 321 428**
**NL—A— 7 702 531**

(73) Titulaire : **COMMISSARIAT A L'ENERGIE ATOMIQUE**
**31/33, rue de la Fédération**
**F-75015 Paris (FR)**

(72) Inventeur : **MABBOUX, Marcel**
**186, montée des Bassins**
**F-04100 Manosque (FR)**
Inventeur : **MERCIER, Claude**
**Montée de Manen**
**Chemin du Clos F-04100 Manosque (FR)**

(74) Mandataire : **Mongrédien, André et al**
**c/o BREVATOME 25, rue de Ponthieu**
**F-75008 Paris (FR)**

## Description

La présente invention se rapporte à un élément de combustible nucléaire destiné à être utilisé dans un réacteur nucléaire, de préférence à neutrons rapides.

Les éléments de combustible nucléaire utilisés dans les réacteurs à neutrons rapides se présentent généralement sous la forme d'aiguilles, qui sont ensuite rassemblées en faisceaux dans des assemblages de combustible nucléaire constituant la partie fissile du cœur du réacteur.

Chaque aiguille de combustible nucléaire comprend pour l'essentiel une gaine métallique tubulaire dans laquelle sont empilées des pastilles de matériau fissile constituant le combustible proprement dit. La gaine est obturée à chacune de ses extrémités par un bouchon qui est emmanché à force à l'intérieur de la gaine puis soudé au niveau du plan de joint entre le bouchon et la gaine.

En raison des tolérances inhérentes à la fabrication des gaines tubulaires, le diamètre intérieur de celles-ci peut varier d'environ 1/100e de mm à l'intérieur d'un même lot de fabrication et d'environ 6/100e de mm pour des lots de fabrication différents.

Pour tenir compte de ces tolérances, le procédé de montage des bouchons actuellement utilisé consiste à réaliser tout d'abord un appariement des bouchons en fonction du diamètre intérieur des gaines. Cet appariement étant réalisé, les bouchons sont emmanchés dans les gaines avec une force de 80 daN environ pour un serrage moyen de 2/100e de mm, avant d'être soudés.

Cependant, malgré les précautions prises, il subsiste toujours des mélanges de gaines provenant de lots différents ou des pièces non conformes, ce qui oblige souvent les fabricants à terminer le bouchonnage manuellement à l'aide d'un marteau et à éliminer les bouchons qui ne tiennent pas dans les gaines. Il en résulte une cadence très faible et un rebut important à ce stade de la fabrication.

De plus, le caractère approximatif du serrage entre les bouchons et la gaine conduit souvent à un serrage excessif provoquant un gonflement anormal de la gaine et un arrachement de métal, souvent à l'origine de défauts dans la zone soudée. Cela constitue une autre cause de rebut lorsqu'il s'agit de défauts rédhibitoires. Parmi ces défauts, on citera la déformation plastique de la face d'appui lors de la pause du bouchon supérieur entraînant un matage nuisible au montage du bouchon inférieur et à la qualité de sa soudure. Une déformation au niveau de la soudure du bouchon inférieur entraîne également des difficultés pour le montage des faisceaux d'aiguilles à l'intérieur des assemblages. En outre, un serrage excessif des bouchons dans la gaine peut conduire au flambage de celle-ci, compte tenu de la grande différence entre son diamètre et sa longueur.

Une conséquence de toutes ces difficultés est qu'il n'est pratiquement pas possible avec la technique actuelle d'envisager une automatisation de la fabrication des éléments de combustible nucléaire.

L'invention a précisément pour objet principal de permettre la fabrication automatique à grande cadence des éléments de combustible nucléaire. Dans ce but, il est proposé un élément de combustible nucléaire dont les bouchons sont réalisés de façon telle que la force d'emmanchement est limitée à une valeur aussi faible que possible, afin d'éviter toute déformation tout en garantissant une bonne tenue du bouchon, sans qu'il soit nécessaire d'apparier les bouchons et les gaines et en garantissant en totalité la conformité du montage, les défauts signalés précédemment étant supprimés.

A cet effet et conformément à l'invention, il est proposé un élément de combustible nucléaire comprenant une gaine tubulaire de diamètre intérieur compris entre un diamètre maximum et un diamètre minimum, obturée à au moins une extrémité par un bouchon comportant une partie cylindrique emmanchée à force dans ladite gaine, caractérisé en ce que ladite partie cylindrique a un diamètre égal audit diamètre minimum de la gaine et comporte au moins trois stries orientées selon des génératrices de ladite partie cylindrique et régulièrement espacées, lesdites stries formant des bourrelets en surplomb par rapport à ladite partie cylindrique sur une épaisseur égale à la moitié de la différence entre le diamètre maximum et le.diamètre minimum de la gaine.

De préférence, seules trois stries sont réalisées sur la partie cylindrique du bouchon, afin que la force d'enfoncement soit réduite à une valeur très faible d'environ 15 daN.

On décrira maintenant, à titre d'exemple non limitatif, un mode de réalisation préféré de l'invention en se référant aux dessins annexés dans lesquels :

— la figure 1 est une vue en perspective représentant un bouchon réalisé conformément à l'invention, emmanché dans une gaine dont l'extrémité est représentée en coupe longitudinale et en traits mixtes ;

— la figure 2 est une section représentant à grande échelle une des stries formée sur la partie cylindrique du bouchon de la figure 1 ; et

— la figure 3 est une vue en perspective et partiellement en coupe d'un outil permettant de réaliser les stries sur la partie cylindrique du bouchon de la figure 1, une pige de réglage de cet outil étant représentée en traits mixtes.

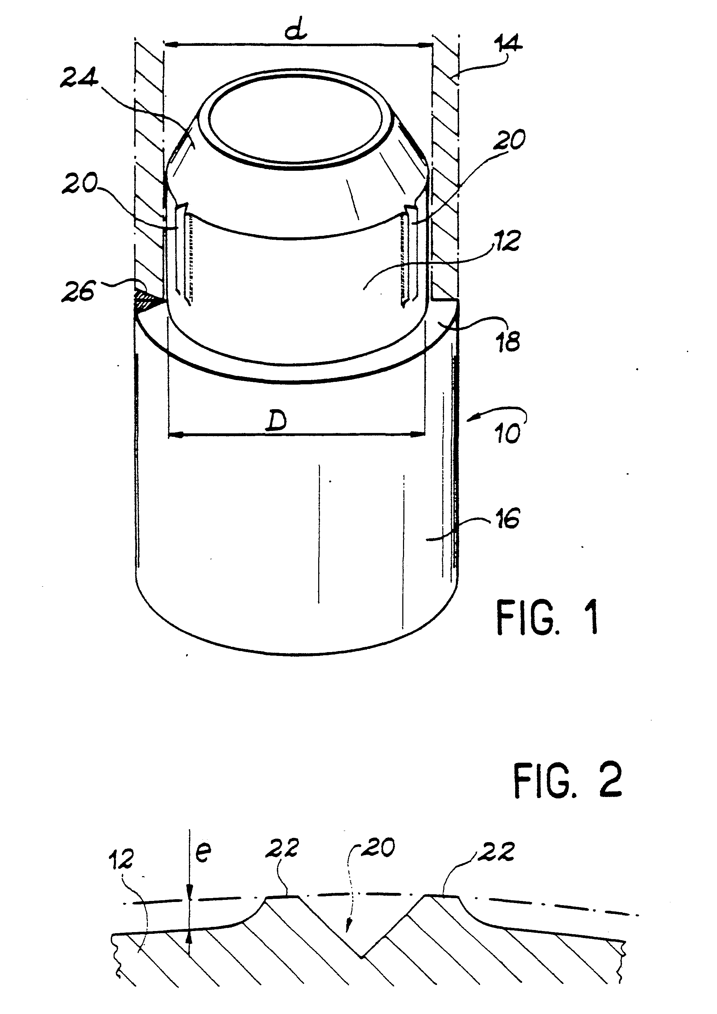

Comme le montre la figure 1, le bouchon 10 selon l'invention est une pièce métallique massive, de forme cylindrique, comportant une partie cylindrique 12 de petit diamètre s'emmanchant dans l'extrémité de la gaine tubulaire 14 et une partie cylindrique 16 de grand diamètre, séparée de la partie 12 par un épaulement 18 qui vient en appui contre l'extrémité de la gaine 14. Comme l'illustre la figure 1, le diamètre externe de la partie 16 du bouchon est sensiblement égal au diamètre externe de la gaine 14.

Conformément à l'invention, la partie cylindrique 12 est conçue de telle sorte qu'elle peut être emmanchée dans la gaine 14 en appliquant un effort minimal d'envion 15 daN, le serrage étant obtenu par déformation élastique de la gaine, ce qui permet d'assurer le maintien du bouchon dans les meilleures conditions possibles avant la réalisation d'une soudure de bonne qualité sans métal d'apport.

A cet effet, on voit sur la figure 1 que le diamètre externe D de la partie cylindrique 12 est légèrement inférieur au diamètre interne d de la gaine. Trois stries 20 réparties à 120° les unes des autres sont formées sur cette partie cylindrique 12 selon des génératrices de celles-ci.

Comme l'illustre en particulier la figure 2, chacune des stries 20 forme deux bourrelets 22 dont l'épaisseur e en surplomb par rapport au diamètre nominal D de la partie cylindrique 12 est légèrement supérieure (d'environ 1 centième de mm) à $(d - D)/2$, de telle sorte que l'emmanchement de la partie 12 à l'intérieur de la gaine 14 provoque une déformation élastique locale de l'intérieur de la gaine et des bourrelets 22 suffisante pour assurer le serrage souhaité.

De façon connue, l'emmanchement du bouchon 16 dans la gaine 14 est facilité par la forme biseautée de l'extrémité 24 de la partie cylindrique 12.

Lorsque l'emmanchement est réalisé, le bouchon 16 et la gaine 14 sont soudés en 26, sans métal d'apport, selon leur plan de joint respectif.

La gaine 14 étant fébriquée par lots successifs, son diamètre intérieur d peut varier de quelques centièmes de mm entre un diamètre maximum $d_{max}$ et un diamètre minimum $d_{min}$. Le diamètre D de la partie cylindrique 12 du bouchon est choisi de préférence égal au diamètre minimum $d_{min}$ et l'épaisseur e des bourrelets 22 formés par les stries 20 est égale à $(d_{max} - d_{min})/2$. Dans le cas d'une fabrication en série à partir de gaines dont le diamètre intérieur varie entre certaines limites connues, on peut ainsi assurer un emmanchement automatisé des bouchons dans les gaines pratiquement sans rebut et dans des conditions de serrage très proches du serrage idéal d'environ 1 centième de mm pour lequel tous les défauts observés avec les techniques utilisées auparavant sont supprimés.

Il est à noter que le nombre de stries 20 formées sur la partie cylindrique 12 du bouchon peut être supérieur à 3. Toutefois, la force d'enfoncement du bouchon augmente rapidement avec le nombre de stries. Ainsi, alors que cette force est de 15 daN lorsque trois stries sont formées sur la partie cylindrique 12 d'un bouchon donné, cette force passerait à 30 daN si la partie cylindrique 12 de ce bouchon comportait quatre stries.

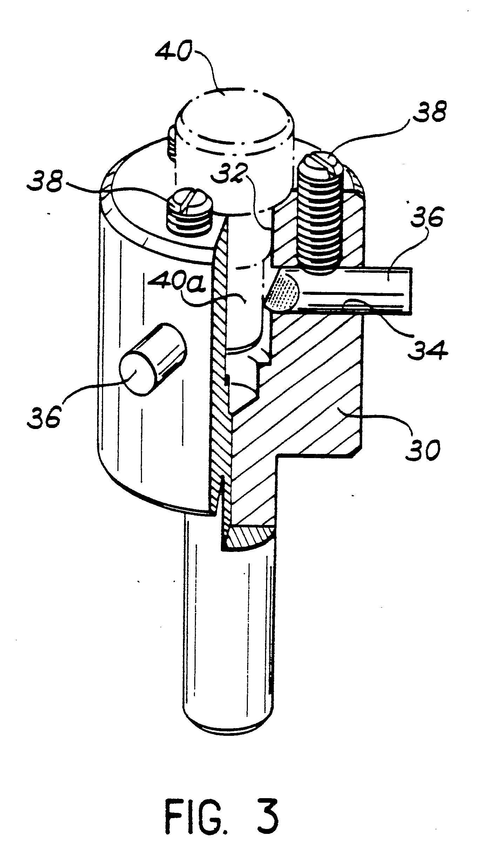

Sur la figure 3, on a représenté à titre d'exemple un outil permettant de former les stries sur la surface de la partie cylindrique du bouchon 10. Cet outil comprend un corps 30 pourvu d'un alésage 32 dans lequel vient se loger la partie cylindrique du bouchon.

Trois trous 34 sont percés radialement au même niveau dans le corps 30 de l'outil et débouchent dans l'alésage 32. Ces trous 34 sont répartis à 120° les uns des autres autour de l'axe du corps 30 et reçoivent chacun une pointe d'usinage 36 qui est immobilisée dans le trou correspondant au moyen d'une vis 38. Le réglage de la position des pointes 36 est réalisé au moyen d'une pige 40 représentée en traits mixtes sur la figure 3. Cette pige 40 se centre dans l'alésage 32 et comporte à son extrémité placée en regard des pointes 36 une partie 40a dont le diamètre détermine la profondeur des stries qui seront réalisées dans le bouchon. Lorsque le réglage est terminé, les pointes 36 sont immobilisées en serrant les vis 38.

L'usinage des stries 20 sur la partie 12 du bouchon est ensuite effectué en enfonçant celui-ci dans l'alésage 32 de l'outil parallèlement à l'axe de cet alésage. Cette opération est suivie d'une finition au tour permettant d'araser les extrémités des bourrelets 22 afin d'éliminer les bavures et de calibrer ces bourrelets à l'épaisseur e souhaitée.

## Revendications

1. Elément de combustible nucléaire comprenant une gaine tubulaire (14) de diamètre intérieur (d) compris entre un diamètre maximum $(d_{max})$ et un diamètre minimum $(d_{min})$, obturée à au moins une extrémité par un bouchon (10) comportant une partie cylindrique (12) emmanchée à force dans ladite gaine, caractérisé en ce que ladite partie cylindrique (12) a un diamètre (D) égal audit diamètre minimum $(d_{min})$ de la gaine et comporte au moins trois stries (20) orientées selon des génératrices de ladite partie cylindrique et régulièrement espacées, lesdites stries formant des bourrelets (22) en surplomb par rapport à ladite partie cylindrique sur une épaisseur (e) égale à la moitié de la différence entre le diamètre maximum $(d_{max})$ et le diamètre minimum $(d_{min})$ de la gaine.

2. Elément de combustible nucléaire selon la revendication 1, caractérisé en ce que ladite partie cylindrique (12) du bouchon (10) comporte trois stries (20).

## Claims

1. Nuclear fuel element comprising a tubular can (14) having an internal diameter (d) between a maximum diameter $(d_{max})$ and a minimum diameter $(d_{min})$, which is sealed at at least one end by a plug (10) having a cylindrical portion (12) force fitted into said can, characterized in that the cylindrical portion (12) has a diameter (D) equal to the minimum diameter $(d_{min})$ of the can and has at least three serrations (20) oriented in accordance with the generatrixes of said cylindrical portion and which are regularly spaced, said serrations forming overhanging beads (22) with respect to said cylindrical portion over a thickness (e) equal to half the difference between the maximum diameter ($d_{max}$) and the minimum diameter ($d_{min}$) of the can.

2. Nuclear fuel element according to claim 1, characterized in that the cylindrical portion (12) of the plug (10) has three serrations (20).

**Patentansprüche**

1. Brennelement für einen Kernreaktor, enthaltend eine tubusförmige Hülse (14) eines Innendurchmessers (d), der zwischen einem Maximaldurchmesser ($d_{max}$) und einem Minimaldurchmesser ($d_{min}$) liegt und die an wenigstens einem Ende von einem Stopfen (10) verschlossen ist, der einen zylindrischen Abschnitt (12) aufweist, der mit Kraft in die gennante Hülse eingedrückt ist, dadurch gekennzeichnet, daß der genannte zylindrische Abschnitt (12) einen Durchmesser (D) aufweist, der gleich dem Minimaldurchmesser ($d_{min}$) der Hülse ist und wenigstens drei Kerben (20) aufweist, die nach den Mantellinien des genannten zylindrischen Abschnitts gerichtet und in gleichmäßigen Abständen angeordnet sind, wobei die genannten Kerben Wulste (22) begrenzen, die gegenüber dem genannten zylindrischen Abschnitt mit einer Dicke (e) vorstehen, die gleich der Hälfte der Differenz zwischen dem Maximaldurchmesser ($d_{max}$) und dem Minimaldurchmesser ($d_{min}$) der Hülse ist.

2. Brennelement für einen Kernreaktor nach Anspruch 1, dadurch gekennzeichnet, daß der gennante zylindrische Abschnitt (12) des Stopfens (10) drei Kerben (20) enthält.

FIG. 1

FIG. 2

FIG. 3